# EUROPÄISCHE PATENTSCHRIFT

(11) **EP 2 907 643 B1**
(45) Veröffentlichungstag und Bekanntmachung des Hinweises auf die Patenterteilung: **12.06.2019**
(21) Anmeldenummer: 14154993.1
(22) Anmeldetag: 13.02.2014
(51) Int. Cl.: B29C 44/34, B29C 33/00, B29L 31/00, B29L 31/26, B29L 22/02

(54) **Dichteinrichtung**
Sealing device
Dispositif d'étanchéité

(43) Veröffentlichungstag der Anmeldung: 19.08.2015
(73) Patentinhaber: FRIMO Group GmbH, 49504 Lotte (DE)
(72) Erfinder: Jens Riesberg, 49134 Wallenhorst (DE); Jan-Gerd Pennekamp, 49082 Osnabrück (DE)
(74) Vertreter: Hoffmann Eitle

(56) Entgegenhaltungen:
- DE-A1- 3 729 179
- DE-A1- 19 842 328
- DE-A1-102006 015 184
- DE-C1- 19 916 789
- DE-U1- 8 432 524
- DE-U1- 29 709 668
- DE-U1-202005 002 316
- GB-A- 502 275

## Beschreibung

### Gebiet der Erfindung

Die Erfindung betrifft eine Dichteinrichtung zum Abdichten zweier benachbarter, unnachgiebiger Maschinenteile, insbesondere zweier Formwerkzeugteile zum Schäumen von Fahrzeugteilen.

### Stand der Technik

Bei der Herstellung von Schaumformteilen, die unter anderem als Armaturenbrett, Autohimmel oder Tür- und Seitenwandverkleidungen in Kraftfahrzeugen zur Anwendung gelangen, wird ein Reaktionsschaum in den Formhohlraum zwischen mindestens zwei zusammengefahrenen Formwerkzeugteilen eingefüllt. Nach der Verfestigung des Reaktionsschaums werden die Formwerkzeugteile auseinander gefahren und das fertige Bauteil kann entnommen werden. Der in den Formhohlraum eingefüllte Reaktionsschaum ist vor seiner Verfestigung im Allgemeinen äußerst dünnflüssig, was zum Austreten von Bestandteilen des Reaktionsschaums führen kann. Dies wiederum resultiert nicht nur in einer Verschmutzung der Umgebung, sondern kann letztlich auch Fehler im fertigen Werkstück hervorrufen.

Aus diesem Grund finden im Stand der Technik Dichteinrichtungen Verwendung, die zwischen den Formwerkzeugteilen eingebracht sind. Insbesondere gelangen dabei elastische Dichtschläuche zur Anwendung, die auf einen entsprechenden, unnachgiebigen Stützkörper aufgezogen sind (siehe beispielsweise EP 1 640 646 A1). Der Schlauch mitsamt dem Stützkörper ist dann beispielsweise in eine Nut eines Maschinenteils eingebracht und dichtet bei Beaufschlagung des Schlauchs mit Druckluft (über den Stützkörper) zu einem benachbarten Formwerkzeugteil ab. Um auch im Bereich des Stützkörpers eine Abdichtung zwischen den Formwerkzeugteilen zu gewährleisten, sind die elastischen Dichtschläuche nach innen eingestülpt auf den Stützkörper aufgezogen. Dies ermöglicht es, dass sich der Schlauch beim Eingeben von Druckluft über seine gesamte Länge, d.h. auch über dem Stützkörper, ausdehnen kann und die Formwerkzeugteile auf ganzer Länge abdichtet.

Die DE 199 16 789 C1 offenbart eine Dichtvorrichtung zur Abdichtung von zumindest zwei einander zugewandten Oberflächen zweier benachbarter Maschinenelemente, die insbesondere einen aufblähbaren Dichtschlauch aufweist, dessen stirnseitige Enden jeweils in einem Einsatzstück angeordnet sind. Die Einsatzstücke sind jeweils als Hülsen ausgebildet, die die stirnseitigen Enden des Dichtschlauchs unter elastischer Vorspannung dichtend umschließen, wobei die Hülsen bevorzugt in entsprechenden Ausnehmungen der Maschinenelemente eingeklebt sind.

Um eine Umstülpung, beziehungsweise eine Abkrempelung des Dichtschlauches zu verhindern, sind hierbei allerdings spezielle Maßnahmen im Bereich der Formwerkzeugteile, an denen der umgestülpte Schlauch anliegt, nötig. Ferner muss der Dichtschlauch trotz der umgestülpten Anordnung dichtend und fest mit dem Stützkörper verbunden sein. Diese Faktoren schränken die Flexibilität und die Wartungsfreundlichkeit einer derartigen Dichteinrichtung stark ein. Muss beispielsweise ein Dichtschlauch ausgetauscht werden, so ist es häufig notwendig, die gesamte Dichteinrichtung inklusive Stützkörper auszutauschen, da der Dichtschlauch von einem Endanwender in Eigenregie kaum vom Stützkörper abgezogen werden, bzw. zuverlässig auf diesen aufgebracht werden kann. Ferner ist es nur schwerlich möglich, die einzelnen Bestandteile einer derartigen Dichteinrichtung modular zusammenzusetzen, um beispielsweise mit Hilfe einiger weniger Standardkomponenten verschiedenartigste Formwerkzeugteile abzudichten.

Des Weiteren birgt vor allem die Notwendigkeit, den Dichtschlauch dichtend auf den Stützkörper aufzuziehen und zu befestigen, die Gefahr einer möglichen Schwachstelle, bei deren Defekt die gesamte Dichteinrichtung unbrauchbar wird.

### Darstellung der Erfindung

Der Erfindung liegt somit die Aufgabe zu Grunde, eine Dichteinrichtung bzw. ein Formwerkzeug bereitzustellen, die gegenüber bestehenden Vorrichtungen höhere Flexibilität und Wartungsfreundlichkeit aufweisen, ohne die Dichtleistung einzuschränken.

Der Grundgedanke der Erfindung liegt dabei darin, den Dichtschlauch (im Folgenden einfach als Schlauch bezeichnet) nicht auf einen Stütz- oder Anschlusskörper aufzubringen, sondern ihn in diesen einzuführen. Um auch im Bereich des Anschlusskörpers eine hinreichende Dichtleistung zu gewährleisten, ist dieser ebenso wie der Schlauch derart ausgelegt, dass er elastisch aufblähbar ist. Zur dichten, bevorzugt luftdichten Verbindung zwischen Schlauch und Anschlusskörper verfügt der Anschlusskörper über eine entsprechende Dichtlippe, die mit dem eingeführten Schlauch eine dichte bzw. luftdichte, Gas-dichte oder allgemein eine fluid-Dichte Verbindung herstellen kann.

Die oben erwähnte Aufgabe wird durch eine Dichteinrichtung und ein Formwerkzeug mit den Merkmalen der Patentansprüche 1 und 13 gelöst. In den Unteransprüchen finden sich vorteilhafte Ausgestaltungen und Weiterbildungen der Erfindung.

Demgemäß umfasst eine Dichteinrichtung zum Abdichten zweier unnachgiebiger Maschinenteile, gemäß Anspruch 1.

Dabei bezieht sich der Ausdruck "aufblähbar" auf eine Materialeigenschaft des Schlauchs und des Anschlusskörpers dahingehend, dass beide unter Druckbeaufschlagung von innen elastisch ausdehnbar sind. Diese elastische Ausdehnung bezeichnet dabei eine deutliche Ausdehnung im Bereich von bis zu 30 Prozent, welche durch Druckbeaufschlagung der Größenordnung bar erlangt werden kann. Somit ist die hier definierte Aufblähbarkeit des Schlauchs und des Anschlusskörpers klar von einer geringfügigen elastischen Ausdehnbarkeit eines starren Körpers, wie etwa einem Metall, abgegrenzt.

Der Schlauch weist dabei bevorzugt einen kreisförmigen Querschnitt auf. Folglich weist auch die Ausnehmung, bzw. weisen auch die Ausnehmungen einen kreisförmigen Querschnitt auf. Bevorzugt entspricht dabei der Innendurchmesser der Ausnehmung in etwa dem Außendurchmesser des Schlauches.

Im Allgemeinen kann ein Anschlusskörper mehrere Ausnehmungen aufweisen, um entsprechend mehrere Endabschnitte von einem Schlauch oder mehreren Schläuchen aufzunehmen. Somit kann der Anschlusskörper sowohl als Endstück, als auch als Verbindungsstück fungieren.

Um eine abgeschlossene Dichteinrichtung zu erlangen, können beide Endabschnitte eines Schlauches jeweils in einen Anschlusskörper eingeführt werden. Alternativ kann ein Endabschnitt des Schlauches auch anderweitig, etwa durch Verschweißen, versiegelt bzw. abgedichtet sein.

Zur Beaufschlagung mit Druckluft kann die Dichteinrichtung über eine geeignete Zuleitung verfügen. Diese ist bevorzugt im Anschlusskörper ausgebildet (s.u.).

Der Ausdruck "dichte Verbindung" heißt in diesem Fall, dass unter Druckbeaufschlagung des Anschlusskörpers und des in eine Ausnehmung eingeführten Schlauches kein Druck zwischen dem aufblähbaren Schlauch und dem aufblähbaren Anschlusskörper entweicht. Im Rahmen der vorliegenden Erfindung bezieht sich die Druckbeaufschlagung bevorzugt auf eine Beaufschlagung der Dichteinrichtung mit Druckluft. Daher ist bevorzugt eine luftdichte Verbindung vorgesehen. Allerdings kann die Druckbeaufschlagung auch mit einem anderen geeigneten Prozessfluid erfolgen.

Jede Ausnehmung des Anschlusskörpers weist mindestens eine umlaufende Dichtlippe auf. Der Ausdruck "umlaufend" heißt in diesem Fall, dass die Dichtlippe am Innenumfang der Ausnehmung umlaufend ausgebildet ist, also insbesondere in radialer Richtung umlaufend nach innen vorsteht.

Der Vorteil der erfindungsgemäßen Dichteinrichtung liegt somit darin, dass durch die Aufblähbarkeit sowohl des Schlauches als auch des Anschlusskörpers eine Abdichtung zwischen zwei unnachgiebigen Maschinenteilen dadurch erreicht wird, dass sich sowohl der Schlauch als auch der Anschlusskörper an die Maschinenteile anlegen. Durch die Dichtlippe wird dabei ein Entweichen von Druck zwischen dem Anschlusskörper und dem Schlauch verhindert, was eine möglichst gleichmäßige Anlage der Dichteinrichtung an die Maschinenteile weiter begünstigt. Dabei kann die Dichteinrichtung bevorzugt derart aufgebläht werden, dass sie an den jeweiligen Maschinenteilen in ihrer Gesamtheit gleichmäßig anliegt. Dies bedeutet insbesondere, dass auch im Bereich des Übergangs vom Anschlusskörper zum Schlauch kein Abfall in der Dichtwirkung der Dichteinrichtung auftritt. Weiterhin ermöglicht die erfindungsgemäße Dichteinrichtung, dass die Schläuche auf einfache Weise in die dafür vorgesehenen Ausnehmungen gesteckt werden können, was sowohl die Wartungsfreundlichkeit der Dichteinrichtung als auch den modularen Charakter der Dichteinrichtung begünstigt. Dabei kann auch vorgesehen sein, dass die erfindungsgemäße Dichteinrichtung aus mehreren Anschlusskörpern und Schläuchen bestehen kann, wobei einige Anschlusskörper als Verbindungsstücke fungieren können. Diese Anschlusskörper können dann mehrere Ausnehmungen aufweisen.

Bevorzugt weist jede Ausnehmung eine umlaufende Dichtlippe auf. Um die Dichtleistung zwischen Anschlusskörper und Schlauch weiter zu verbessern, können allerdings auch mehrere umlaufende Dichtlippen in jeder Ausnehmung vorgesehen sein.

Bevorzugt sind die Dichtlippen jeweils integral mit den jeweiligen Anschlusskörpern ausgebildet.

Dies hat nicht nur den Vorteil, dass die Anschlusskörper in einem Arbeitsgang - etwa durch Spritzgießen - ausgebildet werden können, sondern führt auch dazu, dass die Anzahl der Bauteile weiter reduziert werden kann, was sowohl die Dichtleistung als auch die Wartungsfreundlichkeit der erfindungsgemäßen Dichteinrichtung weiter verbessert.

Die erfindungsgemäße Dichteinrichtung ist ausgelegt, in einem Aufblähvorgang, bei dem die Dichteinrichtung von innen mit einem Druck beaufschlagt wird, aufgebläht zu werden. Dabei ist es besonders bevorzugt, dass sich der Schlauch in dem Aufblähvorgang in höherem Maße elastisch aufbläht als der Anschlusskörper.

Dies hat den Vorteil, dass der aufgeblähte Schlauch einen etwaigen Größenunterschied der Außenabmessungen zwischen dem Anschlusskörper und dem Schlauch in aufgeblähtem Zustand ausgleichen kann, was die gleichmäßige Anlage der gesamten Dichteinrichtung an die Maschinenteile weiter begünstigt. Zusätzlich wird dadurch die Dichtleistung zwischen Anschlusskörper und Schlauch weiter verbessert.

Gemäß einer bevorzugten Ausführungsform verjüngt sich der Anschlusskörper in seiner Außenabmessung hin zur Öffnung der Ausnehmung.

Dies hat den Vorteil, dass eine gleichmäßige Anlage der aufgeblähten Dichteinrichtung an die Maschinenteile weiter begünstigt wird, da sich der Anschlusskörper im Bereich der Öffnung durch die verringerte Materialstärke besonders gut an die Maschinenteile anschmiegen kann.

Des Weiteren kann die Dichteinrichtung gemäß einer bevorzugten Ausführungsform dadurch gekennzeichnet sein, dass sich die Ausnehmung bezüglich des Innenumfangs der Ausnehmung aufweitet.

Dies begünstigt nicht nur das Einführen des Schlauches in die Ausnehmung, sondern bedeutet wiederum, dass der Anschlusskörper im Bereich der Öffnung der Ausnehmung einfacher deformierbar ist, was es erlaubt, etwaige Größenunterschiede zwischen dem Anschlusskörper und dem Schlauch in aufgeblähtem Zustand einfach auszugleichen. Letzteres begünstigt somit wiederum die gleichmäßige Anlage der gesamten Dichteinrichtung an die Maschinenteile.

Es ist dabei bevorzugt, dass die Dichtlippe bezüglich der Öffnung nach hinten, das heißt ins Innere des Anschlussköpers/der Ausnehmung versetzt ist. Dies stellt sicher, dass die Dichtleistung zwischen Schlauch und Anschlusskörper nicht durch eine Deformation des Anschlusskörpers im Bereich der Öffnung herabgesetzt werden kann.

Es ist ferner bevorzugt, dass die Dichtlippe auf der Seite, welche der Öffnung der Ausnehmung abgewandt ist, hinterschnitten ist.

Dies erleichtert nicht nur das Einführen des Schlauches, sondern ermöglicht auch ein Verzahnen des Schlauches mit dem Anschlusskörper, wenn der Schlauch in die Ausnehmung eingeführt ist. Der Verzahnungs- oder Widerhaken-Effekt kann sich dabei in aufgeblähtem Zustand noch verstärken - insbesondere dann, wenn sich der Schlauch in dem Aufblähvorgang in höherem Maße elastisch aufbläht als der Anschlusskörper.

Gemäß einer bevorzugten Ausführungsform ist in den Ausnehmungen, bzw. der Ausnehmung des mindestens einen Anschlusskörper ein Endanschlag angeordnet, gegen den der in die jeweilige Ausnehmung eingeführte Schlauch anliegt, wobei der Endanschlag bezüglich der Öffnung der Ausnehmung hinter der Dichtlippe, bzw. den Dichtlippen angeordnet ist und der Endanschlag mit dem Anschlusskörper bevorzugt integral ausgebildet ist.

Die Bereitstellung eines Endanschlags hat den besonderen Vorteil, dass die Einbringung des Schlauches in den Anschlusskörper besonders definiert und akkurat vollzogen werden kann, was wiederum der Dichtleistung zu Gute kommt. Dabei ist der Endanschlag so dimensioniert, dass er auch in aufgeblähtem Zustand der Dichteinrichtung als Endanschlag fungieren kann. Die Tatsache, dass der Endanschlag bevorzugt integral mit dem Anschlusskörper ausgebildet ist, trägt wiederum zur einfachen Herstellung der erfindungsgemäßen Dichteinrichtung bei.

Bevorzugt verfügt die erfindungsgemäße Dichteinrichtung über mindestens einen Anschlusskörper, welcher über eine Zuleitung verfügt, über welche die Dichteinrichtung in dem Aufblähvorgang mit Druck und insbesondere Druckluft zu beaufschlagen ist.

Die Zuleitung kann dabei als Fortsatz des Anschlusskörpers ausgebildet sein und beliebig angepasst werden. Dies ermöglicht es beispielsweise, die Dichteinrichtung einfach an die abzudichtenden Maschinenteile anzupassen. Dabei ist die Zuleitung bevorzugt integral mit dem Anschlusskörper ausgebildet, was wiederum die Herstellung der Dichteinrichtung vereinfacht. Gemäß einer bevorzugten Ausführungsform wird die Dichteinrichtung mit Druckluft beaufschlagt. Allerdings kann hierzu auch jedwedes andere geeignete Prozessfluid verwendet werden.

Wie bereits erwähnt, kann die Dichteinrichtung über mindestens einen Anschlusskörper verfügen, welcher über zwei Ausnehmungen verfügt, in die jeweils ein Endabschnitt mindestens eines Schlauches einführbar ist. Dieser Anschlusskörper fungiert demzufolge als Verbindungsstück.

Die Tatsache, dass sowohl der Schlauch als auch der Anschlusskörper gemäß der Dichteinrichtung der vorliegenden Erfindung aufblähbar sind, macht es allerdings auch möglich, eine hinreichende Abdichtleistung zu erreichen, wenn zwei erfindungsgemäße Dichteinrichtungen "einander folgen", ohne dass diese Dichteinrichtungen miteinander in Verbindung stehen. "Einander folgen" heißt in diesem Zusammenhangen, dass die Endstücke oder Stirnseiten zweier benachbarter Anschlusskörper gegeneinander anliegen, d.h. zwei Dichteinrichtungen stirnseitig zueinander ausgerichtet sind.

Um die notwendigen Ausdehnungseigenschaften beziehungsweise Aufblähungseigenschaften des mindestens einen Anschlusskörpers der erfindungsgemäßen Dichteinrichtung zu gewährleisten, ist der Anschlusskörper bevorzugt aus einem elastischen Harz, einem Elastomer, einem thermoplastischen Polymermaterial oder einem elastischen Silikonmaterial ausgebildet.

Dies gewährleistet unter Druckbeaufschlagung eine hinreichende Ausdehnung auch des Anschlusskörpers und garantiert gleichzeitig eine gute Herstellbarkeit des Anschlusskörpers, beispielsweise durch Spritzgießen.

Bevorzugt weisen der mindestens eine Anschlusskörper und der mindestens eine Schlauch gegenüber dem Material zum Schäumen von Fahrzeugteilen selbsttrennende Eigenschaften auf.

Dies hat den Vorteil, dass etwaige Reste des Schaumaterials einfach von der Dichteinrichtung entfernt werden können, ohne die Leistungsfähigkeit der Dichteinrichtung zu beeinträchtigen.

Bevorzugt ist die Dichteinrichtung in eine umlaufende Nut eines der Maschinenteile eingefügt und die Dichteinrichtung ist derart ausgelegt, dass sie in dem Aufblähvorgang derart aufgebläht wird, dass sie an dem der Nut gegenüberliegenden Maschinenteil in ihrer Gesamtheit gleichmäßig anliegt.

Ist die Dichteinrichtung in einer umlaufenden Nut eines Maschinenteils eingefügt, hat dies den besonderen Vorteil, dass die Dichteinrichtung zusätzlich bezüglich der Maschinenteile fixiert wird, was eine genauere und gezieltere Abdichtung der Maschinenteile ermöglicht. Ferner begünstigt das Einbringen der Dichteinrichtung in die Nut eines der Maschinenteile das gleichmäßige Anliegen der gesamten Dichteinrichtung an die abzudichtenden Maschinenteile. Das gleichmäßige Anliegen der Dichteinrichtung in ihrer Gesamtheit bedeutet hierbei wiederum, dass sowohl im Bereich der Schläuche als auch im Bereich der Anschlusskörper durch Aufblähen der Dichteinrichtung eine hinreichende Abdichtung zwischen den Maschinenteilen erreicht werden kann. Insbesondere heißt dies auch, dass in dem Bereich, in dem der Schlauch in den Anschlusskörper übergeht, die Dichtleistung nicht beeinträchtigt ist.

Dabei ist es bevorzugt, dass die Nut im Bereich, der dem Anschlusskörper entspricht, zusätzlich einen ausgenommenen Abschnitt derart aufweist, dass die Innenabmessung der Nut in diesem Bereich größer ist, als die Außenabmessung des jeweiligen Anschlusskörpers.

Demgemäß verfügt ein erfindungsgemäßes Formwerkzeug zum Schäumen von Fahrzeugteilen über mindestens zwei Formwerkzeugteile, wobei die Formwerkzeugteile derart zusammengefahren und gehalten werden können, dass sie gegeneinander unnachgiebig sind, wobei mindestens eines der Formwerkzeugteile eine Nut aufweist, die gegenüber mindestens einem anderen Formwerkzeugteil angeordnet ist, in die Nut eine erfindungsgemäße Dichteinrichtung eingebracht ist und die Dichteinrichtung derart ausgelegt ist, dass sie in einem Aufblähvorgang derart aufgebläht werden kann, dass sie an dem der Nut gegenüberliegenden Maschinenteil und in der Nut in ihrer Gesamtheit gleichmäßig anliegt.

Gemäß einer bevorzugten Ausführungsform ist die Nut zumindest im Abschnitt, welcher dem Anschlusskörper/den Anschlusskörpern entspricht derart dimensioniert, dass sie eine größere Innenabmessung aufweist als die Außenabmessung des Anschlusskörpers. Mit anderen Worten ist die Nut also im Abschnitt des Anschlusskörpers/der Anschlusskörper gegenüber den Abmessungen des Anschlusskörpers/der Anschlusskörper der eingefügten Dichteinrichtung zusätzlich ausgenommen. Dies hat den Vorteil, dass der Anschlusskörper auch bei wiederholtem Aufblähen und Zusammenziehen nicht über den Rand der Nut vorsteht.

### Kurze Beschreibung der Zeichnungen

Die Erfindung wird im Folgenden anhand von Ausführungsbeispielen unter Bezugnahme auf die beiliegenden Figuren näher erläutert.

Dabei zeigt:
- Figur 1: eine Schnittansicht der erfindungsgemäßen Dichteinrichtung gemäß einer Ausführungsform der Erfindung, welche in eine Nut in einem Maschinenteil eingebracht ist;
- Figur 2: eine perspektivische, auseinandergezogene Darstellung der Dichteinrichtung gemäß einer Ausführungsform der Erfindung;
- Figur 3A: eine geschnittene Ansicht eines Anschlusskörpers, wobei der Schnitt entlang der X-X-Linie in Figur 2 getätigt ist;
- Figur 3B: eine geschnittene Ansicht eines Anschlusskörpers, wobei der Schnitt entlang der Linie Y-Y in Figur 2 getätigt ist;
- Figur 4A: eine teilweise geschnittene Ansicht der erfindungsgemäßen Dichteinrichtung, welche in aufgeblähtem Zustand zwischen zwei Maschinenteilen abdichtet;
- Figur 4B: eine Detailansicht der Ansicht von Figur 4A; und
- Figur 5: eine weitere Ausführungsform des Anschlusskörpers.

Soweit nichts Gegenteiliges angegeben ist, bezeichnen in den Figuren dieselben Bezugszeichen gleiche oder funktionsgleiche Komponenten.

### Ausführliche Beschreibung bevorzugter Ausführungsformen der Erfindung

Im Folgenden werden Ausführungsformen der Erfindung in Bezugnahme auf die beigefügten Zeichnungen beschrieben. Weitere in diesem Zusammenhang genannte Modifikationen können jeweils miteinander kombiniert werden, um neue Ausführungsformen auszubilden.

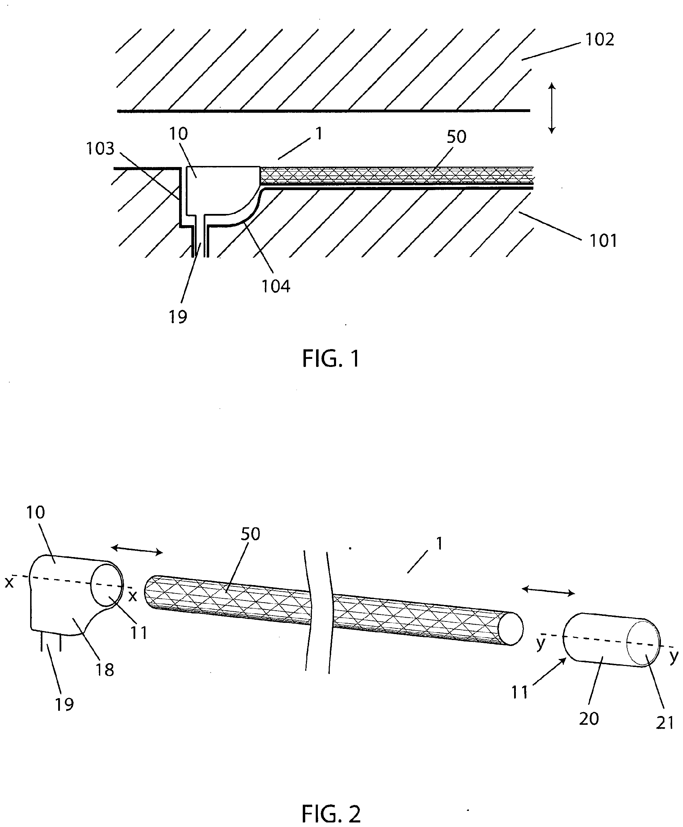

Figur 1 zeigt eine teilweise geschnittene Ansicht einer Ausführungsform einer Dichteinrichtung 1 gemäß der vorliegenden Erfindung, welche in eine Nut 103 eines Maschinenteils 101 eingefügt ist. In der gewählten Darstellung ist ein Anschlusskörper 10 der Dichteinrichtung 1 sowie ein Schlauch 50 der Dichteinrichtung 1 dargestellt.

Dabei verfügt der Anschlusskörper 10 über eine Zuleitung 19, mit der die Dichteinrichtung 1 mit Druck, insbesondere Druckluft zu beaufschlagen ist. In der gewählten Darstellung ist ferner ein zweites Maschinenteil 102 gezeigt, das mit dem ersten Maschinenteil 101 zusammengefahren werden kann.

Wie in Figur 2 gezeigt, kann der Schlauch 50 dabei in eine Ausnehmung 11 des Anschlusskörpers 10, bzw. 20 eingeführt werden. Hierfür sind sowohl die Ausnehmungen 11 als auch der Schlauch 50 geeignet dimensioniert. Das heißt der Außenumfang des Schlauchs 50 entspricht in etwa dem Innenumfang der Ausnehmung 11.

Im vorliegenden Fall weisen der Schlauch 50 und entsprechend auch die Ausnehmung 11 einen kreisförmigen Querschnitt auf. Allerdings sind weder der Schlauch 50 noch die Ausnehmung 11 hierauf limitiert.

Ferner wird darauf hingewiesen, dass die in Figuren 1 und 2 gezeigte Geometrie des Anschlusskörpers 10 beliebig variierbar ist, um beispielsweise an die Form der Nut 103 im Maschinenteil 101 angepasst werden zu können. Der in den Zeichnungen exemplarisch dargestellte "Bauchabschnitt" 18 trägt dabei der Ausgestaltung bestehender Nuten 103 von herkömmlichen Maschinenteilen Rechnung. Damit kann die erfindungsgemäße Dichteinrichtung problemlos in bestehende Maschinenteile integriert werden. Es sei allerdings betont, dass die äußere Gestalt des Anschlusskörpers 10 beliebig variiert werden kann. Insbesondere kann der Bauchabschnitt 18 auch weggelassen werden.

Der mit Bezugszeichen 10 bezeichnete Anschlusskörper verfügt ferner über eine Zuleitung 19 mit der die Dichteinrichtung 1 von innen mit einem Druck beaufschlagt werden kann. Demgegenüber verfügt der mit Bezugszeichen 20 bezeichnete Anschlusskörper lediglich über eine Ausnehmung 11, in die ein Endabschnitt des Schlauchs 50 einbringbar ist. Somit dient der Anschlusskörper 20 als Abdichtungselement des Schlauches 50 bzw. der Dichteinrichtung 1, während der Anschlusskörper 10 die erfindungsgemäße Dichteinrichtung 1 mit (nicht dargestellten) Vorrichtungen zum Beaufschlagen der Dichteinrichtung 1 mit einem Druck verbindet.

Sowohl der Schlauch 50 als auch die jeweiligen Anschlusskörper 10, 20 sind aufblähbar. Dies bedeutet, dass eine elastische Ausdehnung der Anschlusskörper 10, 20 und des Schlauchs 50 erfolgt, wenn die Dichteinrichtung 1 beispielsweise in einem Aufblähvorgang mit Druck beaufschlagt wird. Mit anderen Worten heißt das, dass die Außenabmessungen der Dichteinrichtung unter Beaufschlagung der Dichteinrichtung 1 von innen mit einem Druck zunehmen, d.h. sich aufblähen.

Wie in Figur 1 dargestellt, kann der Abschnitt der Nut 103, in dem der Anschlusskörper 10, 20 aufgenommen ist, im Vergleich zu den Ausmaßen des Anschlusskörpers 10, 20 zusätzlich ausgenommen sein. Dieser ausgenommene Abschnitt ist in der Zeichnung mit 104 bezeichnet. Der ausgenommene Abschnitt 104 kann dabei als Vertiefung des Sitzes für den Anschlusskörper 10, 20 in radialer Richtung und/oder in Längsrichtung der Dichteinrichtung (d.h. an der Stirnseite des Anschlusskörpers) vorgesehen sein. Der ausgenommene Abschnitt 104 stellt dabei insbesondere sicher, dass die Dichteinrichtung nicht über den Rand der Nut vorsteht, wenn die Dichteinrichtung 10 nicht mit Druck beaufschlagt ist. Gleichzeitig ist der ausgenommene Abschnitt 104 so ausgelegt, dass die Dichteinrichtung 1 in aufgeblähtem Zustand, d.h. insbesondere auch der Anschlusskörper 10, 20, gleichmäßig an der Nut 103 und dem gegenüberliegenden Maschinenteil 102 anliegen kann. Wird der Druck aus der Dichteinrichtung 1 abgelassen, findet der Anschlusskörper 10, 20 durch den ausgenommene Abschnitt 104 selbsttätig in seine Mittellage, wodurch ein Vorstehen der Dichteinrichtung 1 über den Rand der Nut 103 verhindert wird ("Einschwimmen").

Die Materialien sowohl des Schlauches 50 als auch der Anschlusskörper 10, 20 sind derart ausgewählt, dass sich eine geeignete Ausdehnung ergibt. Je nach Anwendungsbereich ist es dabei vorgesehen, dass sich die Außenabmessungen der Dichteinrichtung unter einem Innendruck im Bar-Bereich um bis zu 30 Prozent ausdehnen können. Geeignete Materialien hierfür sind beispielsweise elastische Harze, Elastomere, thermoplastische Polymermaterialien oder elastische Silikonmaterialen.

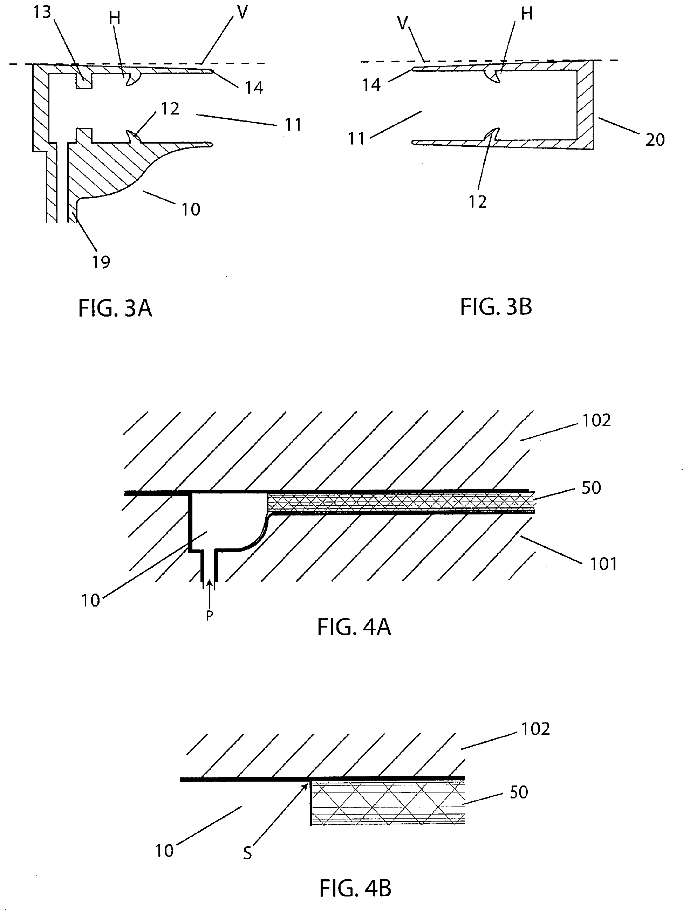

Wie in Figur 2 angedeutet, kann der Schlauch 50 für das Zusammensetzen der erfindungsgemäßen Dichteinrichtung 1 einfach in die jeweilige Ausnehmung 11 der Anschlusskörper 10, 20 eingeführt, beziehungsweise eingesteckt werden. Um ein Abrutschen der Anschlusskörper 10, 20 vom Schlauch zu verhindern, verfügen die erfindungsgemäßen Anschlusskörper 10, 20 über mindestens eine umlaufende Dichtlippe 12, welche in den Figuren 3A beziehungsweise 3B dargestellt ist. Dabei zeigt Figur 3A eine Schnittansicht des Anschlusskörpers 10 mit Zuleitung 19, während Figur 3B eine Schnittansicht einer Ausführungsform des Anschlusskörpers 20 ohne Zuleitung 19 zeigt.

Wie in Figuren 3A und 3B dargestellt, sind die Dichtlippen 12 bevorzugt hinterschnitten. Wie ferner aus Figuren 3A und 3B ersichtlich ist, heißt "hinterschnitten" in diesem Zusammenhang, dass die Dichtlippe 12 auf der der Ausnehmung 11 abgewandten Seite eine Hinterschneidung H aufweist.

Dies erlaubt es, dass sich der in die Ausnehmung 11 eingeführte Schlauch 50 mit dem Anschlusskörper 10, 20 verzahnt, was die dichte Verbindung zwischen dem Anschlusskörper 10, 20 und dem Schlauch 50 begünstigt. Dabei wird der Verzahnungseffekt, wenn die Dichteinrichtung 1 mit Druck beaufschlagt ist, das heißt sich insbesondere der Schlauch 50 ausdehnt, noch weiter verstärkt.

Um eine durchgängig (luft-)dichte Verbindung zwischen dem jeweiligen Anschlusskörper 10, 20 und dem Schlauch 50 zu gewährleisten, verläuft die Dichtlippe 12 dabei umlaufend um den gesamten Innenumfang der Ausnehmung 11.

Die Dichtlippe 12 ist dabei derart dimensioniert, dass einerseits das Einführen des Schlauchs 50 in die Ausnehmung 11 über die Dichtlippe 12 hinweg ermöglicht wird, und andererseits die (luft-)dichte Verbindung zwischen den jeweiligen Anschlusskörpern 10, 20 und dem Schlauch 50 auch in aufgeblähtem Zustand der Dichteinrichtung 1 sichergestellt werden kann.

Wie in den Figuren 3A und 3B dargestellt, weitet sich die Ausnehmung 11 hin zur Öffnung der Ausnehmung 11 bezüglich ihres Innenumfangs in diesen Ausführungsformen leicht auf (siehe Bereich 14). Dies begünstigt die Einführung des Schlauchs 50 in die Ausnehmung.

Bezüglich der Öffnung der Ausnehmung 11 ist die Dichtlippe 12 in der gezeigten Ausführungsform so weit nach hinten versetzt, dass sich eine stabile Verbindung zwischen den Anschlusskörpern 10, 20 und dem Schlauch 50 ergibt. Alternativ können die Ausnehmungen 11 auch über mehrere Dichtlippen 12 verfügen.

Unabhängig von der Anzahl der Dichtlippen 12, deren Gestalt und deren Anordnung ist es jedoch bevorzugt, dass die Dichtlippen integral mit dem Hauptkörper des Anschlusskörpers 10, bzw. 20 ausgebildet sind.

Während der in Figur 3B dargestellte Anschlusskörper 20 lediglich einen Endabschnitt eines Schlauches abdichtet, verfügt der in Figur 3A dargestellte Anschlusskörper 10 zusätzlich über eine Zuleitung 19. Diese ist in der gezeigten Ausführungsform ebenfalls integral mit dem Anschlusskörper 10 ausgebildet.

Um die Zuleitung nicht durch den eingeführten Schlauch 50 zu blockieren, ist es ferner vorteilhaft, wenn der mit der Zuleitung 19 versehene Anschlusskörper 10 über einen Endanschlag 13 verfügt. Dieser Endanschlag 13 begrenzt dann die Einführtiefe des Schlauchs 50 in die Ausnehmung 11. Auch der Endanschlag 13 ist dabei integral mit dem Anschlusskörper 10 ausgeführt. Dabei ist es wiederum vorteilhaft, wenn der Endanschlag 13 so dimensioniert ist, dass er auch in aufgeblähtem Zustand der Dichteinrichtung 1 als Endanschlag für den Schlauch 50 fungieren kann.

Alternativ zum Bereitstellen eines Endanschlages 13 kann der Schlauch 50 auch geeignet ausgeschnitten, bzw. eingeschnitten sein, sodass ausgeschlossen werden kann, dass der eingeführte Schlauch 50 die Zuleitung 19 blockiert. Dieses Ausschneiden, bzw. Einschneiden des Schlauches 50 kann beispielsweise durch einen schrägen Anschnitt des Schlauches 50 erlangt werden. Alternativ kann auch ein geeigneter Ausschnitt an einer entsprechenden Stelle des Schlauches 50 vorgesehen sein. Dieser kann beispielsweise in einer V- oder U-Form ausgebildet sein.

Die Figuren 4A und 4B zeigen die in die Nut 103 des Maschinenteils 101 eingebrachte Dichteinrichtung 1 in aufgeblähtem Zustand, was bedeutet, dass die Dichteinrichtung 1 mit einem Druck p beaufschlagt ist. Ferner sind die Maschinenteile 101 und 102 in einem zusammengefahrenen Zustand dargestellt. Somit dichtet die Dichteinrichtung 1 zwischen den zusammengefahrenen, unnachgiebigen Maschinenteilen 101 und 102 ab.

Dabei ist zu beachten, dass es die erfindungsgemäße Dichteinrichtung 1 ermöglicht, dass die Dichteinrichtung 1 über ihre gesamte Erstreckungslänge gleichmäßig in der Nut 103, bzw. dem gegenüberliegenden Maschinenteil 102 anliegt. Das gleichmäßige Anliegen der Dichteinrichtung 1 wird dabei dadurch ermöglicht, dass beide Komponenten, der Anschlusskörper 10, 20, sowie der Schlauch 50, unter Druckbeaufschlagung aufblähbar sind. Dies macht das im Stand der Technik beschriebene Umstülpen des Schlauchs 50 über die gesamte Länge eines starren Anschlusskörpers unnötig und trägt damit zu einer erheblichen Vereinfachung der Dichteinrichtung 1 bei. Folglich kann durch die erfindungsgemäße Dichteinrichtung sowohl eine einfachere Herstellung, als auch eine bessere Wartbarkeit der Dichteinrichtung erzielt werden.

Das gleichmäßige Anliegen der Dichteinrichtung 1 kann dabei durch folgende Maßnahmen noch gefördert werden: Zum einen kann sich, wie in den Figuren 3A beziehungsweise 3B dargestellt, der Anschlusskörper 10, 20 hin zur Öffnung der Ausnehmung 11 in seiner Außenabmessung verjüngen (Bereich V). Zum anderen können die Anschlusskörper 10, 20 und/oder die Schläuche derart ausgelegt sein, dass sich die Anschlusskörper 10, 20 in einem Aufblähvorgang weniger stark ausdehnen als der entsprechende Schlauch 50.

Dabei trägt die sich verjüngende Außenabmessung des Anschlusskörpers dazu bei, dass sich die Anschlusskörper 10, 20 im Bereich der Öffnung der Ausnehmung 11, z.B. durch den sich aufblähenden Schlauch 50, gut deformieren lassen, was zu einem verbesserten Anschmiegen des Anschlusskörpers 10, 20 an die jeweiligen Maschinenteile 101, 102 führt. Zudem reduziert die sich verjüngende Außenabmessung im Bereich V (zusammen mit der Aufweitung des Innenumfangs der Ausnehmung) die Materialstärke an der Öffnung der Ausnehmung, was einen etwaigen Versatz zwischen dem Anschlusskörper 10, 20 und dem Schlauch 50 reduziert.

Um den Versatz im aufgeblähten Zustand der Dichteinrichtung 1 weiter zu reduzieren, kann der Schlauch 50 wie erwähnt derart ausgelegt sein, dass er sich in stärkerem Maße ausdehnt, als der jeweilige Anschlusskörper 10, 20. Dadurch schmiegt sich der Schlauch 50 im Bereich S, in dem der Anschlusskörper in den Schlauch übergeht, besonders gut an die Öffnung der Ausnehmung 11 an, und der Versatz zwischen Anschlusskörper 10, 20 und Schlauch 50 wird minimiert. Dies ist in Figur 4B dargestellt.

Das Ausdehnungsverhältnis unter Druckbeaufschlagung kann dabei sowohl durch die Materialeigenschaften als auch durch die Materialstärke eingestellt werden. Bevorzugt liegt das Ausdehnungsverhältnis zwischen dem Anschlusskörper 10, 20 und dem Schlauch 50 im Bereich von bis zu 1 zu 1,3.

Zudem verbessert das unterschiedliche Ausdehnungsverhalten die Dichtleistung zwischen Anschlusskörper 10, 20 und Schlauch 50 im aufgeblähten Zustand der Dichteinrichtung 1 (selbstdichtender Effekt).

Wie erwähnt ist die Dichteinrichtung 1 dafür vorgesehen, mit einem Druck p beaufschlagt zu werden, wobei hierbei häufig Druckluft verwendet wird. Allerdings kann die Dichteinrichtung 1 selbstverständlich auch mit einem anderen Prozessfluid mit Druck beaufschlagt werden.

In einer bevorzugten Ausführungsform sind die Materialien der Anschlusskörper 10, 20 und des Schlauchs 50 ferner derart ausgewählt oder behandelt, dass sie gegenüber dem Schaummaterial, das in den Formhohlraum der Maschinenteile 101, 102 einzubringen ist, selbsttrennende Eigenschaften aufweisen.

Die Anschlusskörper 10, 20 sind dabei nicht auf die in den Figuren 3A und 3B dargestellten Ausführungsformen beschränkt. Vielmehr erlaubt es die Möglichkeit, alle wesentlichen Komponenten integral mit dem Hauptkörper der Anschlusskörper 10, 20 auszuführen, dass diverse Abwandlungen der dargestellten Anschlusskörper 10, 20 problemlos dargestellt werden können.

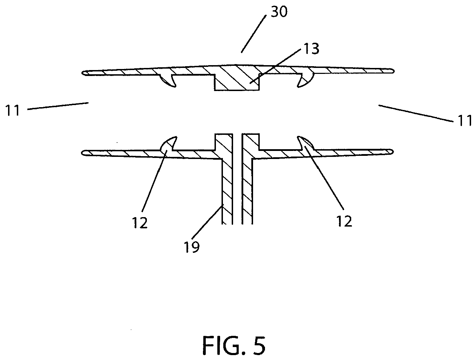

Eine derartige Abwandlung ist in Figur 5 gezeigt. Der Anschlusskörper 30 gemäß Figur 5 verfügt über zwei Ausnehmungen 11 sowie eine Zuleitung 19. Somit weist der Anschlusskörper 30 die Form eines "T"s auf. Davon abgesehen entspricht der Anschlusskörper 30 den Abschlusskörpern 10, 20 mit einer Ausnehmung 11. Ferner weist er Dichtlippen 12 sowie einen Endanschlag 13 auf.

Dies deutet an, dass es mit den erfindungsgemäßen Komponenten der Dichteinrichtung 1 möglich ist, hochgradig modulare Dichtsysteme aufzubauen. So können verschiedene Schläuche beziehungsweise Endabschnitte von Schläuchen unter Verwendung von Anschlusskörpern mit mehr als zwei Ausnehmungen problemlos miteinander verbunden werden.

Durch die Verwendung von Anschlusskörpern 10, 20, welche sich aufblähen können, ist es ferner möglich, eine Dichtwirkung zwischen Anschlusskörpern 10, 20 zu erreichen, die sich beispielsweise an ihren Stirnseiten 21 gegenüber liegen. Werden die zugehörigen Dichteinrichtungen 1 zweier derartiger Anschlusskörper 10, 20 mit Druck beaufschlagt, so kommen die Stirnseiten 21 der Anschlusskörper 10, 20 in engen Kontakt miteinander und dichten somit den Zwischenraum zwischen zwei Dichteinrichtungen ab.

Erfindungsgemäß kann somit nicht nur eine Dichteinrichtung bereitgestellt werden, sondern auch ein geeignetes Formwerkzeug zum Schäumen von Fahrzeugteilen mit mindestens zwei Formwerkzeugteilen. Dieses Formwerkzeug ist in den Abbildungen 1 beziehungsweise 4A und 4B dargestellt. Erfindungsgemäß verfügt mindestens ein Formwerkzeugteil 101 dabei über eine Nut 103, in welche die erfindungsgemäße(n) Dichteinrichtung(en) eingebracht ist (sind).

Werden die Dichteinrichtungen in einem Aufblähvorgang aufgebläht, liegen sie demnach in ihrer Gesamtheit gleichmäßig an der Nut 103 und dem der Nut 103 gegenüberliegenden Maschinenteil 102 an. Diese Situation ist in den Figuren 4A und 4B dargestellt. Dabei trägt die Nut 103 dazu bei, dass die Dichteinrichtung 1 an ihrem Platz gehalten werden kann und sich kontrolliert aufbläht.

Indem das Formwerkzeug 101 mit einer geeigneten Nut 103 ausgestatten wird, in der die Dichteinrichtung 1 eingebracht ist, kann eine sehr gute Abdichtung beispielsweise beim Schäumen von Fahrzeugteilen erzielt werden. Zusammenfassend kann somit ein System bereitgestellt werden, bei dem die Dichteinrichtung 1 modular aufgebaut und einfach gewartet werden kann.

Obwohl die vorliegende Erfindung anhand bevorzugter Ausführungsbeispiele beschrieben wurde, ist sie nicht darauf beschränkt, sondern auf vielfältige Weise modifizierbar. Der Erfindungsgegenstand wird durch die folgenden Ansprüche definiert.

## Patentansprüche

1. Dichteinrichtung (1) zum Abdichten zweier unnachgiebiger Maschinenteile (101, 102), insbesondere zweier Formwerkzeugteile zum Schäumen von Fahrzeugteilen, mit:
mindestens einem aufblähbaren Schlauch (50), und
mindestens einem Anschlusskörper (10, 20, 30), der eine Ausnehmung (11) derart aufweist, dass in diese ein Endabschnitt des mindestens einen Schlauches (50) einführbar ist, **dadurch gekennzeichnet, dass**
der Anschlusskörper aufblähbar ist, und
jeder der mindestens einen Anschlusskörper (10, 20, 30) in der jeweiligen Ausnehmung (11) mindestens eine umlaufende Dichtlippe (12) aufweist, die ausgelegt ist, eine dichte Verbindung zwischen dem jeweiligen Anschlusskörper (10, 20, 30) und dem Schlauch (50) herzustellen, der in die jeweilige Ausnehmung (11) eingeführt ist.

2. Dichteinrichtung (1) nach Anspruch 1, wobei die Dichtlippen (12) jeweils mit den jeweiligen Anschlusskörpern (10, 20, 30) integral ausgebildet sind.

3. Dichteinrichtung (1) nach Anspruch 1 oder 2, wobei
die Dichteinrichtung (1) ausgelegt ist, in einem Aufblähvorgang, bei dem die Dichteinrichtung (1) von innen mit einem Druck beaufschlagt wird, aufgebläht zu werden.

4. Dichteinrichtung (1) nach einem der vorhergehenden Ansprüche, wobei
sich der Schlauch (50) oder die Schläuche (50) in dem Aufblähvorgang in höherem Maße elastisch aufbläht oder aufblähen als der mindestens eine Anschlusskörper (10, 20, 30).

5. Dichteinrichtung (1) nach einem der vorhergehenden Ansprüche, wobei
sich der mindestens eine Anschlusskörper (10, 20, 30) zur Öffnung der Ausnehmung (11) in seiner Außenabmessung verjüngt, und/oder
sich die Ausnehmung (11) hin zur Öffnung der Ausnehmung (11) bezüglich des Innenumfangs der Ausnehmung (11) aufweitet.

6. Dichteinrichtung (1) nach einem der vorhergehenden Ansprüche, wobei
die mindestens eine Dichtlippe (12) auf der Seite, welche der Öffnung der mindestens einen Ausnehmung (11) abgewandt ist, hinterschnitten ist.

7. Dichteinrichtung (1) nach einem der vorhergehenden Ansprüche, wobei
in den Ausnehmungen/der Ausnehmung (11) des mindestens einen Anschlusskörpers (10, 30) ein Endanschlag (13) angeordnet ist, gegen den der in die jeweilige Ausnehmung (11) eingeführte Schlauch (50) anliegt, wobei
der Endanschlag (13) bezüglich der Öffnung der Ausnehmung (11) hinter der Dichtlippe/den Dichtlippen (12) angeordnet ist, und
der Endanschlag (13) mit dem Anschlusskörper (10, 30) integral ausgebildet ist.

8. Dichteinrichtung (1) nach einem der vorhergehenden Ansprüche, wobei
mindestens einer der Anschlusskörper (10, 30) über eine Zuleitung (19) verfügt, über welche die Dichteinrichtung (1) in dem Aufblähvorgang mit Druckluft zu beaufschlagen ist.

9. Dichteinrichtung (1) nach einem der vorhergehenden Ansprüche, wobei
mindestens einer der Anschlusskörper (30) über zwei Ausnehmungen (11) verfügt, in die jeweils ein Endabschnitt mindestens eines Schlauches (50) einführbar ist.

10. Dichteinrichtung (1) nach einem der vorhergehenden Ansprüche, wobei
der mindestens eine Anschlusskörper (10, 20, 30) aus einem elastischen Harz, einem Elastomer, einem thermoplastischen Polymermaterial oder einem elastischen Silikonmaterial ausgebildet ist.

11. Dichteinrichtung (1) nach einem der vorhergehenden Ansprüche, wobei
der mindestens eine Anschlusskörper (10, 20, 30) und der mindestens eine Schlauch (50) gegenüber dem Material zum Schäumen von Fahrzeugteilen selbstrennende Eigenschaften aufweisen.

12. Dichteinrichtung (1) nach einem der vorhergehenden Ansprüche, wobei
die Dichteinrichtung (1) in eine umlaufende Nut (103) eines der Maschinenteile (101) einführbar ist; und die Dichteinrichtung (1) ausgelegt ist, in dem Aufblähvorgang derart aufgebläht zu werden, dass sie an dem der Nut (103) gegenüberliegenden Maschinenteil (102) in ihrer Gesamtheit gleichmäßig anliegt.

13. Formwerkzeug zum Schäumen von Fahrzeugteilen, mit mindestens zwei Formwerkzeugteilen (101, 102), wobei
die Formwerkzeugteile (101, 102) derart zusammengefahren und gehalten werden können, dass sie gegeneinander unnachgiebig sind;
mindestens eines der Formwerkzeugteile (101) eine Nut (103) aufweist, die gegenüber mindestens einem anderen Formwerkzeugteil (102) angeordnet ist;
in die Nut eine Dichteinrichtung (1) nach einem der Ansprüche 1 bis 11 eingebracht ist; und
die Dichteinrichtung (1) ausgelegt ist, in einem Aufblähvorgang derart aufgebläht zu werden, dass sie an dem der Nut (103) gegenüberliegenden Maschinenteil (102) und in der Nut (103) in ihrer Gesamtheit gleichmäßig anliegt.

## Claims

1. Sealing device (1) for sealing off two rigid mechanical parts (101, 102), and in particular two mould tool parts for the foam-moulding of vehicle components, having:
at least one inflatable hose (50), and
at least one connecting body (10, 20, 30) which has an opening (11) such that an end portion of the at least one hose (50) can be introduced thereinto, **characterised in that**
the connecting body is inflatable, and
each of the connecting bodies (10, 20, 30) of which there is at least one has, in its respective opening (11), at least one sealing lip (12) which extends round in a loop and which is designed to make a sealed connection between the respective connecting body (10, 20, 30) and the hose (50) which has been introduced into the respective opening (11) .

2. Sealing device (1) according to claim 1, wherein the sealing lips (12) are each integrally formed with their respective connecting bodies (10, 20, 30).

3. Sealing device (1) according to claim 1 or 2, wherein
the sealing device (1) is designed to be inflated in an inflation process in which pressure is applied to the sealing device (1) from inside.

4. Sealing device (1) according to one of the preceding claims, wherein,
in the inflation process, the hose (50) or hoses (50) inflates or inflate elastically to a greater extent than the at least one connecting body (10, 20, 30).

5. Sealing device (1) according to one of the preceding claims, wherein
the outside dimensions of the at least one connecting body (10, 20, 30) become smaller towards the mouth of the opening (11), and/or
the opening (11) becomes larger in respect of the inside circumference of said opening (11) towards the mouth of said opening (11).

6. Sealing device (1) according to one of the preceding claims, wherein
the at least one sealing lip (12) is undercut on the side remote from the mouth of the at least one opening (11) .

7. Sealing device (1) according to one of the preceding claims, wherein
there is arranged in the opening/openings (11) in the at least one connecting body (10, 30) an end stop (13) against which the hose (50) introduced into the respective opening (11) comes to rest, wherein,
relative to the mouth of the opening (11), the end stop (13) is arranged to the rear of the sealing lip/sealing lips (12), and
the end stop (13) is integrally formed with the connecting body (10, 30).

8. Sealing device (1) according to one of the preceding claims, wherein
at least one of the connecting bodies (10, 30) has an inlet duct (19) via which compressed air is to be applied to the sealing device (1) in the inflation process.

9. Sealing device (1) according to one of the preceding claims, wherein
at least one of the connecting bodies (30) has two openings (11) into each of which an end portion of at least one hose (50) can be introduced.

10. Sealing device (1) according to one of the preceding claims, wherein
the at least one connecting body (10, 20, 30) is formed of an elastic resin, an elastomer, a thermoplastic polymer material or an elastic silicone material.

11. Sealing device (1) according to one of the preceding claims, wherein
the at least one connecting body (10, 20, 30) and the at least one hose (50) have self-releasing properties from the material for the foam-moulding of vehicle components.

12. Sealing device (1) according to one of the preceding claims, wherein
the sealing device (1) can be introduced into a groove (103) extending round in a loop in one (101) of the mechanical parts; and
the sealing device (1) is designed to be inflated in the inflation process in such a way that the whole of it bears evenly against the mechanical part (102) situated opposite the groove (103).

13. Mould tool for the foam-moulding of vehicle components, having at least two mould tool parts (101, 102), wherein
the mould tool parts (101, 102) can be brought together and held in such a way that they are rigid against one another;
at least one (101) of the mould tool parts has a groove (103) which is arranged opposite at least one other mould tool part (102);
there is a sealing device (1) according to one of claims 1 to 11 inserted in the groove; and
the sealing device (1) is designed to be inflated in an inflation process in such a way that the whole of it bears evenly into the groove (103) and against the mechanical part (102) situated opposite the groove (103).

## Revendications

1. Dispositif d'étanchéité (1) pour étanchéifier deux pièces de machine (101, 102) rigides, en particulier deux pièces d'outil de formage pour fabriquer en mousse des pièces de véhicule, avec :
au moins un tuyau (50) gonflable, et
au moins un corps de raccordement (10, 20, 30), qui comporte un évidement (11) de telle sorte qu'une extrémité de l'au moins un tuyau (50) peut être introduite dans ledit évidement,
**caractérisé en ce que**
le corps de raccordement est gonflable, et
chacun des au moins un corps de raccordement (10, 20, 30) comporte dans l'évidement (11) respectif au moins une lèvre d'étanchéité (12) périphérique qui est conçue pour créer une liaison étanche entre le corps de raccordement (10, 20, 30) respectif et le tuyau (50) qui est introduit dans l'évidement (11) respectif.

2. Dispositif d'étanchéité (1) selon la revendication 1, dans lequel les lèvres d'étanchéité (12) sont réalisées de manière intégrée à chaque fois aux corps de raccordement (10, 20, 30) respectifs.

3. Dispositif d'étanchéité (1) selon la revendication 1 ou 2, dans lequel le dispositif d'étanchéité (1) est conçu pour être gonflé lors d'une opération de gonflage lors de laquelle le dispositif d'étanchéité (1) est alimenté de l'intérieur en pression.

4. Dispositif d'étanchéité (1) selon l'une quelconque des revendications précédentes, dans lequel
le tuyau (50) ou les tuyaux (50) sont plus gonflés élastiquement que l'au moins un corps de raccordement (10, 20, 30) lors de l'opération de gonflage.

5. Dispositif d'étanchéité (1) selon l'une quelconque des revendications précédentes, dans lequel
l'au moins un corps de raccordement (10, 20, 30) se rétrécit au niveau de sa dimension extérieure en direction de l'ouverture de l'évidement (11), et/ou
l'évidement (11) s'élargit par rapport à la périphérie intérieure de l'évidement (11) en direction de l'ouverture de l'évidement (11).

6. Dispositif d'étanchéité (1) selon l'une quelconque des revendications précédentes, dans lequel
l'au moins une lèvre d'étanchéité (12) présente une contre-dépouille sur le côté qui est éloigné de l'ouverture de l'au moins un évidement (11).

7. Dispositif d'étanchéité (1) selon l'une quelconque des revendications précédentes, dans lequel
dans le ou les évidements (11) de l'au moins un corps de raccordement (10, 30) est agencée une butée terminale (13) contre laquelle s'appuie le tuyau (50) introduit dans l'évidement (11) respectif,
la butée terminale (13) est agencée, par rapport à l'ouverture de l'évidement (11), derrière la ou les lèvres d'étanchéité (12), et
la butée terminale (13) est réalisée de manière intégrée au corps de raccordement (10, 30).

8. Dispositif d'étanchéité (1) selon l'une quelconque des revendications précédentes, dans lequel
au moins un des corps de raccordement (10, 30) dispose d'une conduite d'alimentation (19) par l'intermédiaire de laquelle le dispositif d'étanchéité (1) doit être alimenté en air comprimé lors de l'opération de gonflage.

9. Dispositif d'étanchéité (1) selon l'une quelconque des revendications précédentes, dans lequel
au moins un des corps de raccordement (30) dispose de deux évidements (11) dans lesquels peut être introduite à chaque fois une extrémité d'au moins un tuyau (50).

10. Dispositif d'étanchéité (1) selon l'une quelconque des revendications précédentes, dans lequel
l'au moins un corps de raccordement (10, 20, 30) est réalisé en une résine élastique, en un élastomère, en un polymère thermoplastique ou en un silicone élastique.

11. Dispositif d'étanchéité (1) selon l'une quelconque des revendications précédentes, dans lequel
l'au moins un corps de raccordement (10, 20, 30) et l'au moins un tuyau (50) comportent des propriétés de séparation automatique par rapport au matériau de fabrication en mousse de pièces de véhicule.

12. Dispositif d'étanchéité (1) selon l'une quelconque des revendications précédentes, dans lequel
le dispositif d'étanchéité (1) peut être introduit dans une rainure périphérique (103) d'une des pièces de machine (101) ; et
le dispositif d'étanchéité (1) est conçu pour être gonflé lors de l'opération de gonflage de telle sorte qu'il s'appuie uniformément et totalement contre la pièce de machine (102) qui fait face à la rainure (103).

13. Outil de formage pour fabriquer en mousse des pièces de véhicule, avec au moins deux pièces d'outil de formage (101, 102), dans lequel
les pièces d'outil de formage (101, 102) peuvent être rapprochées et maintenues de telle sorte qu'elles sont rigides l'une par rapport à l'autre ;
au moins l'une des pièces d'outil de formage (101) comporte une rainure (103) qui est agencée en face d'au moins une autre pièce d'outil de formage (102) ;
un dispositif d'étanchéité (1) selon l'une quelconque des revendications 1 à 11 est placé dans la rainure ; et
le dispositif d'étanchéité (1) est conçu pour être gonflé lors d'une opération de gonflage de telle sorte qu'il s'appuie uniformément et totalement à la pièce de machine (102) située en face de la rainure (103) et dans la rainure (103).
